# EUROPEAN PATENT APPLICATION

(11) **EP 2 538 066 A1**
(43) Date of publication of application: **26.12.2012**
(21) Application number: 11170541.4
(22) Date of filing: 20.06.2011
(51) Int. Cl.: F02M 51/00, F02M 59/46, F02M 61/16, F02M 63/02, F02M 63/00, F16K 31/06, F16L 37/088

(54) **Assembly for an electrically operated valve**

(71) Applicant: Delphi Technologies Holding S.à.r.l., 4940 Bascharage (LU)
(72) Inventor: Dupont, Richard, 37400 Amboise (FR); Marechal, Michel, 41150 Chouzy Sur Cisse (FR); Cardon, Christophe, 41000 Saint Denis Sur Loire (FR)
(74) Representative: Gregory, John David Charles

(57) **Abstract**

The invention relates to an assembly (30) for an electrically operated valve (34) in the automotive field aimed to increase the injection pressure of fuel distributed to combustion chambers, said assembly (30) comprising both a coil unit (32), wherein a solenoid (33) can control the movements of the electrically operated valve (34) in a housing along a given axis (36), and an hydraulic unit (35) to provide fuel at the injection pressure, a clip ring (38) being located into a cavity of the coil unit (32) and a cavity of the hydraulic unit (35) to maintain the coil unit (32) and the hydraulic unit (35) associated.

The invention is characterized in that the coil unit (32) presents a plurality of slots (46) providing access to the clip ring (38), across the coil unit, from the exterior of the assembly.

## Description

The invention relates to an assembly for an electrically operated valve in the automotive field, and more precisely for a discharge valve associated to a fuel injection system comprising a common rail. The invention also relates to a process for manufacturing or disassembling such assembly and to a disassembling tool.

### BACKGROUND OF INVENTION:

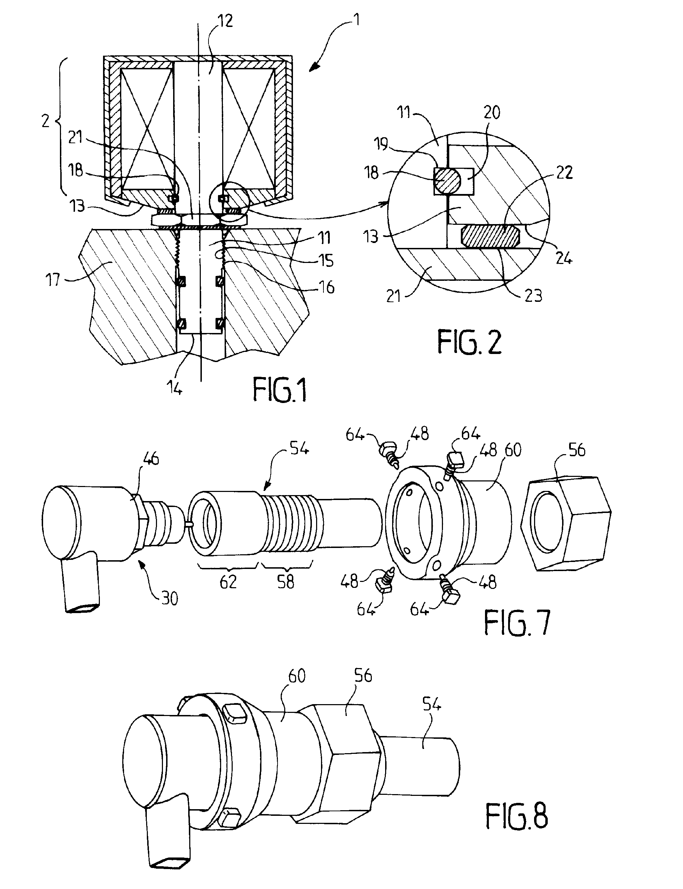

In reference to figure 1, a known assembly 1 for an electrically operated valve can control fuel injection in a common rail shared by a plurality of combustion chambers, these later elements (valve, common rail and combustion chambers not being represented).

For that purpose such assembly 1 comprises a coil unit 2 receiving a substantially cylindrical housing 11, one (12) of the ends of which is inserted in the axial slot of a solenoid 13 aimed to control the movements of the valve. The other end 14 of the cylindrical housing 11 carries a thread 15 which cooperates with a tapping 16 of a hydraulic unit 17 aimed to introduce fuel at a pressure to be increased thereafter by the assembly 1 before its final injection within a combustion chamber.

In order to maintain the position of the coil unit 2 relatively to the housing 11 and the hydraulic unit 17, the assembly 1 comprises a clip ring 18 extending itself into both a first circular cavity 19 (figure 2) in the housing 11 and a second radial cavity 20 on a face of the solenoid 13 facing the housing 11. The respective locations of these two cavities, or grooves, 19, 20 are suited in height so that said two grooves 19, 20 are positioned one facing the other when the solenoid 13 comes into abutment against a collar 21 i.e. when the solenoid 13 comes into its operating position relatively to the housing 11.

An elastically compressible ring 22 is arranged around the housing 11 of the electrically operated valve. More precisely, the compressible ring 22 is located between a first contact surface 23 of the collar 21 and a second opposed annular contact surface 24 of the solenoid 13.

When fitting the solenoid 13 with the valve housing 11, the ring 22 is compressed until the solenoid 13 is axially locked by the clip ring 18 and associated to the hydraulic unit 17.

Such a process allows positioning the solenoid 11 - by axial rotation - during the manufacturing of the assembly 1 while the load over the elastic ring 22 avoids rotating the solenoid 13 during the product life.

However, this known assembly cannot be disassembled without damaging an element of the assembly. Indeed, the manufacturing process as previously described is not reversible without mechanically stretching one element of the assembly and damaging its structure.

As a matter of fact, this irreversibility provides reliability as to the strength of the assembly but its disassembling cost is increased by the price of the at least one damaged element.

Moreover, damaging an element represents a loss of information relatively to the state of the damaged element during its normal use. Thus a disassembly process aimed to examine one element could be unreliable if said element appears to be damaged by the process itself.

### SUMMARY OF THE INVENTION

The aim of the invention is to remedy to at least one of the disadvantages previously mentioned by proposing an assembly which can be disassembled without damaging any of its elements.

Thus the invention concerns an assembly for an electrically operated valve in the automotive field aimed to increase the injection pressure of fuel distributed to combustion chambers, said assembly comprising both a coil unit, wherein a solenoid can control the movements of the electrically operated valve in a housing along a given axis, and an hydraulic unit to provide fuel at the injection pressure, a clip ring being located into a cavity of the coil unit and a cavity of the hydraulic unit to maintain the coil unit and the hydraulic unit associated, characterized in that the coil unit presents a plurality of slots providing access to the clip ring, across the coil unit, from the exterior of the assembly.

An assembly according to the invention can be disassembled without damaging any of its elements. Indeed, the slots across the coil unit allow the clip ring to be pushed away from the coil unit and maintained within the hydraulic unit.

Thus the cost of a disassembly process is decreased by the cost of at least one element which is no further damaged by the disassembling process. Moreover no information is lost by the disassembling process which can be used to assess the operating state of assembly elements.

Furthermore, it has to be underlined that manufacturing lines which already exists to manufacture assemblies according to prior art can be used to manufacture assemblies according to the invention.

In one embodiment the slots extend themselves radially across the coil unit in a plane defined by the clip ring.

In one embodiment the slots extend themselves axially on a length at least equal to the diameter of the clip ring.

In one embodiment the slots extend themselves axially until one extremity of the coil unit.

In one embodiment the slots are symmetrically disposed relatively to the assembly axis.

In one embodiment an elastically compressible intermediate ring is compressed between the coil unit and the hydraulic unit.

The invention also relates to a process for manufacturing an assembly for an electrically operated valve in the automotive field aimed to increase the injection pressure of fuel distributed to combustion chambers, said assembly comprising both a coil unit, wherein a solenoid can control the movements of the electrically operated valve in a housing along a given axis, and an hydraulic unit to provide fuel at the injection pressure, a clip ring being located into a cavity of the coil unit and a cavity of the hydraulic unit to maintain the coil unit and the hydraulic unit associated, characterized in that it comprises the step of using a coil unit according to any of the previous embodiments presenting a plurality of slots providing access to the clip ring, across the coil unit, from the exterior of the assembly.

The invention also relates to a process for disassembling an assembly according to any of the previous embodiments, said assembly comprising both a coil unit, wherein a solenoid can control the movements of the electrically operated valve in a housing along a given axis, and an hydraulic unit to provide fuel at the injection pressure, a clip ring being located into a cavity of the coil unit and a cavity of the hydraulic unit to maintain the coil unit and the hydraulic unit associated, characterized in that it comprises the step of pushing the clip ring with arms introduced through the slots until the coil unit is disassembled from the hydraulic unit.

In one embodiment, the process further comprises the step of using a tool presenting a contact part, whose shape fits part of the assembly shape, and a threaded part wherein a nut is fixed in order to block an intermediary support comprising screws whose threaded rods form arms aimed to be screwed in the threaded slots.

The invention also relates to a disassembling tool aimed to operate on an assembly according to any of the prior embodiments, said tool comprising a contact part, whose shape fits part of the assembly shape, and a threaded part wherein a nut is fixed in order to block an intermediary support comprising screws to be pushed in threaded slots of the assembly.

### BRIEF DESCRIPTION OF DRAWINGS

Other characteristics and advantages of the invention will become apparent from the following description of a non-limiting embodiment of the invention, with reference to the attached figures in which:
- Figures 1 is a view in diagrammatic section showing an assembly according to the prior art;
- Figure 2 is a view in section to a larger scale of some details circled in figure 1;
- Figures 3, 4 and 5 are views in diagrammatic section showing an assembly according to an embodiment of the invention;
- Figure 6 is a view in section to a larger scale of some details in figure 4, and
- Figure 7 and 8 are views in perspective showing different elements of a disassembling tool according to an embodiment of the invention;

### DETAILED DESCRIPTION OF AN EMBODIMENT OF THE INVENTION

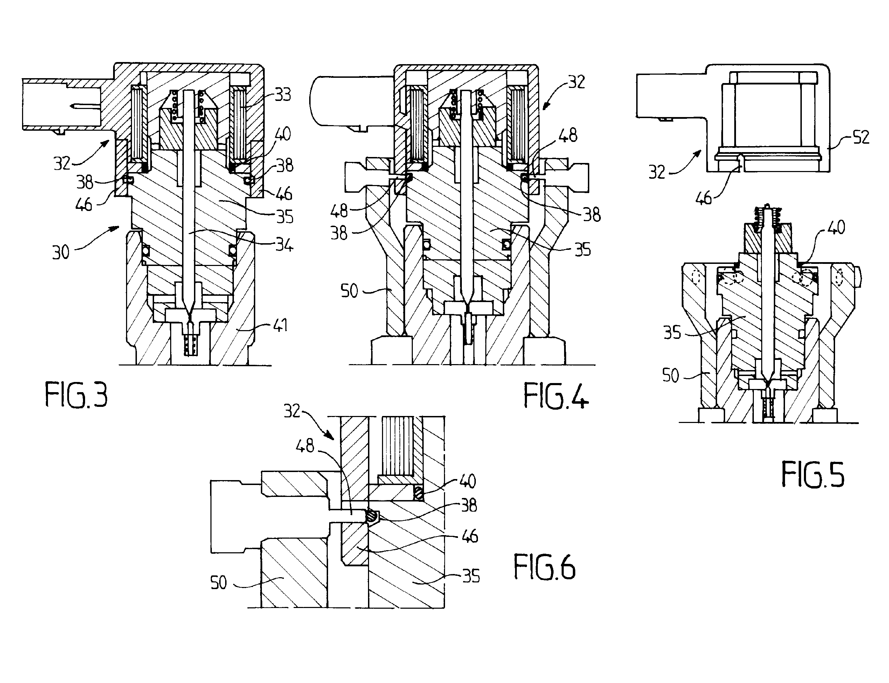

Figure 3 represents an assembly 30 for an electrically operated valve in the automotive field. Such assembly 30 aims to control the injection pressure of fuel provided through a common rail 41 to different injectors of associated combustion chambers, the injectors and the combustion chambers not being represented.

For that purpose the assembly 30 might perform, as a high pressure valve (HPV), at least one of the following main functions:
- Lowering the pressure in the common rail 41 by discharging fuel,
- Heating the fuel provided to the common rail 41 in cold start engine conditions,
- Maintaining a minimum pressure in the common rail 41 (natural pressure) to start and run the engine in case of an open circuit of the actuator, or venting the common rail 41 when the engine is switched off by discharging pressurized mixture of "air + fuel".

The assembly 30 can also control the high pressure in the common rail 41 in specific modes of fuel distribution such as:
- In absence or failure of an inlet metering valve delivering fuel quantity needed to generate pressure demand in rail,
- A fault on a high pressure sensor (HPS) measuring the rail pressure, and
- An overpressure in the high pressure circuit (PLV function).

The assembly 30 comprises a coil unit 32 wherein a solenoid 33 controls the movements of a valve 34 following an axis 36.

An elastically compressible intermediate ring 40 is compressed between the coil unit 32 and the hydraulic unit 35 while a clip ring 38 is located into radial cavities of the coil unit 32 or the hydraulic unit 35 in order to maintain both units associated. The respective locations of these two cavities, or grooves, are suited in height so that they are positioned one facing the other when the coil unit 32 comes into its operating position relatively to the hydraulic unit 35.

According to this embodiment of the invention, the coil unit 32 presents a plurality of slots 46 extending radially across the coil unit 32 within the plane defined by the clip ring 38.

Through these slots 46, the clip ring 38 can be removed from the radial cavity of the coil unit 32 and maintained in the radial cavity of the hydraulic unit as represented in figure 4.

In this figure 4, the assembly 30 is represented associated to a tool 50 performing the separation of the coil unit 32 from the hydraulic unit 35 without damaging any of these units.

For that purpose, the assembly 30 - removed from its operating position associated to a common rail 41 - is placed in contact with the tool 50 whose shape fits part of the assembly 30 shape as a common rail 41.

In this position, arms 48 of the tool 50 face the slots 46 so that they can be pushed within the slots 46 until coming into contact with the clip ring 38.

The arms 48 can further progress into the slots 46 so that the clip ring 38 is compressed and excluded from the cavity of the coil unit 32 while being maintained in the radial cavity of the hydraulic unit 35 as represented in figure 4.

In this position the coil unit 32 moves away from the hydraulic unit 35 as represented in figure 5 since the elastically compressed ring 40, arranged between the hydraulic unit 35 and the coil unit 32 as described in the prior art, delivers a constant load in that sense.

In other words the elastic ring 40 forces a displacement of the coil unit 32 relatively to the hydraulic unit 35 as shown in figure 5.

In this figure 5, the coil unit 32 is represented in a perspective view showing an exterior view of one of the slots 46 of the coil unit 32. It appears that the slot 46 extends itself axially so that the coil unit 32 can move while the arms 48 maintain the clip ring within the radial cavity of the hydraulic unit.

In this embodiment, the slots 46 also extend themselves axially from the clip ring plane until the extremity 52 of the coil unit 32 facing the hydraulic unit so that the coil unit 32 can be completely removed from the hydraulic unit while the arms 48 maintain the clip ring 38 compressed.

It has to be underlined that an assembly 30 according to the invention can be manufactured according to already existing manufacturing process. Thus the invention does not increase the manufacturing of an assembly 30.

As illustrated in figures 7 and 8, disassembling of such an assembly 30 can be performed through a tool 54 comprising a contact part 62 wherein the assembly 30 is positioned and maintained so that the arms 48 can be pushed across the coil unit slots as previously described in figure 4.

In this embodiment the tool 54 also presents a threaded part 58 cooperating with a nut 56 in order to block a support 60 of the arms 48.

Thus the position of the support 60 can precisely be determined towards the assembly 30, which ensures a precise position of the arms 48. In the embodiment, the arms 48 are threaded rods of screws 64 aimed to be screwed in the threaded slots 38.

The invention is not limited to the above description of a given embodiment and can be derived through different embodiments.

## Claims

1. An assembly (30) for an electrically operated valve (34) in the automotive field aimed to increase the injection pressure of fuel distributed to combustion chambers, said assembly (30) comprising both a coil unit (32), wherein a solenoid (33) can control the movements of the electrically operated valve (34) in a housing along a given axis (36), and an hydraulic unit (35) to provide fuel at the injection pressure, a clip ring (38) being located into a cavity of the coil unit (32) and a cavity of the hydraulic unit (35) to maintain the coil unit (32) and the hydraulic unit (35) associated, **characterized in that** the coil unit (32) presents a plurality of slots (46) providing access to the clip ring (38), across the coil unit (32), from the exterior of the assembly (30).

2. An assembly (30) according to claim 1 wherein the slots (46) extend themselves radially across the coil unit (32) in a plane defined by the clip ring (38).

3. An assembly (30) according to claim 1 or 2 wherein the slots (46) extend themselves axially (36) on a length at least equal to the diameter of the clip ring (38).

4. An assembly (30) according to claim 3 wherein the slots (46) extend themselves axially (36) until one extremity (52) of the coil unit (32).

5. An assembly (30) according to any of the previous claims wherein the slots (46) are symmetrically disposed relatively to the assembly axis (35).

6. An assembly (30) according to any of the previous claims wherein an elastically compressible intermediate ring (40) is compressed between the coil unit (32) and the hydraulic unit (35).

7. A process for manufacturing an assembly (30) for an electrically operated valve (34) in the automotive field aimed to increase the injection pressure of fuel distributed to combustion chambers, said assembly (30) comprising both a coil unit (32), wherein a solenoid (33) can control the movements of the electrically operated valve (34) in a housing along a given axis (36), and an hydraulic unit (35) to provide fuel at the injection pressure, a clip ring (38) being located into a cavity of the coil unit (32) and a cavity of the hydraulic unit (35) to maintain the coil unit (32) and the hydraulic unit (35) associated, **characterized in that** it comprises the step of using a coil unit (32) according to any of the previous claims presenting a plurality of slots (46) providing access to the clip ring (38), across the coil unit (32), from the exterior of the assembly (30).

8. A process for disassembling an assembly (30) comprising both a coil unit (32), wherein a solenoid can control the movements of the electrically operated valve in a housing along a given axis (35), and an hydraulic unit (35) to provide fuel at the injection pressure, a clip ring (38) being located into a cavity of the coil unit (32) and a cavity of the hydraulic unit (35) to maintain the coil unit (32) and the hydraulic unit (35) associated, according to any of the claims 1 to 6, **characterized in that** it comprises the step of pushing the clip ring (38) with arms (48) introduced through the slots (46)) until the coil unit (32) is disassembled from the hydraulic unit (35).

9. A process according to claim 8 wherein it further comprises the step of using a tool (50, 54) presenting a contact part (62), whose shape fits part of the assembly shape, and a threaded part (58) wherein a nut (56) is fixed in order to block an intermediary support (60) comprising screws (64) whose threaded rod form the arms (48) aimed to be screwed in threaded slots (38).

10. A disassembling tool (50, 54) aimed to operate on an assembly (30) according to any of the prior claims 1 to 6 comprising a contact part (62), whose shape fits part of the assembly shape, a threaded part (58) wherein a nut (56) is fixed in order to block an intermediary support (60) comprising screws (64) to be pushed in the threaded slots (38) of the assembly (30).
